(19) Europäisches Patentamt

European Patent Office

Office européen des brevets

(11) **EP 0 908 231 B1**

(12) **EUROPEAN PATENT SPECIFICATION**

(45) Date of publication and mention
of the grant of the patent:
**22.01.2003 Bulletin 2003/04**

(51) Int Cl.[7]: **B01J 23/85**, C10G 45/60,
B01J 21/12

(21) Application number: **98203390.4**

(22) Date of filing: **09.10.1998**

(54) **Process for the hydroisomerization of long-chain n-paraffins and catalyst suitable for the purposes**

Verfahren für die Hydroisomerisierung von langkettigen n-Paraffinen und ein zu diesem Zweck geeignetes Katalysator

Procédé d'hydroisomérisation des n-paraffines à longues chaines et catalyseurs utilisables à cet effet

(84) Designated Contracting States:
**AT BE CH CY DE DK ES FI FR GB GR IE LI LU MC NL PT SE**
Designated Extension States:
**AL LT LV MK RO SI**

(30) Priority: **09.10.1997 IT MI972288**

(43) Date of publication of application:
**14.04.1999 Bulletin 1999/15**

(73) Proprietor: **AGIP PETROLI S.p.A.**
**00142 Roma (IT)**

(72) Inventors:
• **Flego, Cristina**
  **34127 Trieste (IT)**

• **Calemma, Vincenzo**
  **20097 San Donato Milanese (Milan) (IT)**

(74) Representative: **De Gregori, Antonella et al**
**Ing. Barzano & Zanardo Milano S.p.A.**
**Via Borgonuovo 10**
**20121 Milano (IT)**

(56) References cited:
**EP-A- 0 497 435       EP-A- 0 582 347**
**EP-A- 0 659 478       US-A- 5 370 788**

Remarks:
The file contains technical information submitted after the application was filed and not included in this specification

**Description**

The present invention relates to a process for the hydroisomerization of long-chain n-paraffins.

More specifically, the present invention relates to a process for the hydroisomerization of n-paraffins having a number of carbon atoms higher than 15, for example between 15 and 60 and the catalyst suitable for the purpose.

The isomerization process of waxes to give bases for lubricating oils characterized by a low "pour point" and a high viscosity index, requires the use of suitable catalysts. It is necessary, in fact, to transform waxes, mostly consisting (more than 70-80% by weight) of n-paraffins with a number of carbon atoms higher than 15 and, therefore, solid at room temperature, into the corresponding branched isomers which have a lower melting point than the linear ones. For example, the $C_{16}$ n-paraffin has a melting point of 19°C whereas the isomer 5-methyl pentadecane melts at -31°C.

An effective hydroisomerization catalyst must, however, minimize possible cracking and hydrocracking reactions which are catalyzed by the same acid sites and analogously the hydroisomerization reaction proceeding through carbocations intermediates. These secondary reactions cause a lowering of the molecular weight with the formation of lighter products of a poorer quality, which must be separated from the end-product. This obviously represents a drawback for the whole process.

To overcome this disadvantage, bifunctional catalysts have been developed, i.e. catalysts having both acid sites and active sites, generally of a metal nature, in hydrodehydrogenation. The catalyst receives the acidity from the type of carrier selected and its function is the isomerizing property. The hydrodehydrogenating activity of the catalyst is provided by the metal phase deposited on the carrier. This metal phase also gives the catalyst the function of minimizing the cracking.

It has been shown that (J.F. Le Page, Applied Heterogeneous Catalysis, Ed. Technip, 1987, 435-466), with the same hydrogenating activity, the most selective catalysts are those in which the carrier has a controlled acidity, which maximizes the isomerization of the n-paraffins on the cracking. However, as the cracking reactions follow the isomerization, the maximum selectivity to isomerization is obtained at low conversion levels (G. Froment et al., Ind. Eng. Chem. Prod. Res. Dev., 1981, 20, 654-660). In any case, the efficiency of various catalysts is evaluated on model compounds such as n-paraffins, by measuring their selectivity i.e. the ratio between isomerization products and cracking products, for a certain conversion of the n-paraffins.

Catalysts and processes for the hydroisomerization of paraffinic waxes are known in scientific literature. For example, in U.S. patent 5.049.536 or in published European patent applications 582,347 and 659,478, catalysts are described based on silica and alumina gel, possibly modified with metals of group VIIIA, particularly palladium and platinum, and their use in hydroisomerization processes of long-chain n-paraffins.

Another example is US-A-5,370,788 disclosing a process for converting waxy hydrocarbons by using a catalyst having a silica and alumina support bearing 2-10 weight % of a Group VIII metal and 8-20 weight % of a Group VI-B metal. Prior to wax conversion the catalyst is sulfided.

Generally, in hydroisomerization processes with catalysts based on a noble metal, the paraffinic waxes used as raw material to be isomerized, come from the production processes of lubricating oils and form the by-product of the extraction process with solvents of the methylethylketone (MEK) type, toluene or their mixtures. This material has a high content of sulfur and nitrogen compounds and polynuclear aromatic compounds which have a negative effect on both the life and activity of this group of catalysts. In fact, sulfur compounds poison the catalyst transforming the noble supported metals into the respective sulfides, nitrogen compounds reduce the activity of the catalyst by blocking the acid sites, whereas polynuclear aromatic compounds act as precursors of the coke which, deposited on the surface of the catalyst, causes a decrease in its activity.

In order to overcome these disadvantages, the n-paraffins to be hydroisomerized are subjected to a hydrogenation process whose main objective is to remove most of the sulfur and nitrogen compounds. In this respect, it should be noted that to prevent a rapid decay of the catalytic activity, the removal of the poisoning compounds must generally be greater than 90-95%. This operation is obviously a great economic burden for the whole hydroisomerization process.

The Applicants have now found a hydroisomerization process of n-paraffins which involves the use of a new catalyst, as active as the catalysts based on noble metals but more resistant to the poisoning agents present in the waxes to be hydroisomerized.

The present invention therefore relates to a process for the hydroisomerization of long-chain n-paraffins which comprises isomerizing n-paraffins having a number of carbon atoms higher than 15 in the presence of hydrogen and a hydroisomerization catalyst which comprises:

    a) a carrier of acid nature consisting of a silica and alumina gel amorphous to X-rays, with a molar ratio $SiO_2/Al_2O_3$ ranging from 30/1 to 500/1, and having a surface area ranging from 500 to 1,000 $m^2/g$, a porosity ranging from 0.3 to 0.6 ml/g and a pore diameter within the range of 10-40 Angstrom;
    b) a mixture of metals belonging to groups VIB and VIII deposited on the carrier in an overall quantity ranging from 2 to 50% by weight of the total (a) + (b).

In a preferred embodiment of the present invention, the acid carrier of the catalyst has a ratio $SiO_2/Al_2O_3$ ranging from 50/1 to 300/1 and a porosity ranging from 0.4 to 0.5 ml/g. The mixture of metals (b) preferably consists of a metal of group VIB selected from molybdenum and tungsten, in a quantity ranging from 5 to 35% by weight, and a non-noble metal of group VIII selected from nickel and cobalt, in a quantity ranging from 0.1 to 5% by weight.

The carrier based on a silica and alumina gel can be conveniently prepared according to the method described in US patent 5.049.536 or in published European patent application EP 659.478. In particular, an aqueous solution is prepared of tetra-alkyl ammonium hydroxide (TAA-OH), wherein alkyl refers, for example, to n-propyl or n-butyl, a soluble compound of aluminum capable of hydrolyzing in $Al_2O_3$ and a soluble compound of silicon capable of hydrolyzing in $SiO_2$, the quantity of constituents in solution being such as to respect the following molar ratios:

$SiO_2/Al_2O_3$ from 30/1 to 500/1;
TAA-OH/$SiO_2$ from 0.05/1 to 0.2/1;
$H_2O/SiO_2$ from 5/1 to 40/1.

The solution thus obtained is heated to cause its gelation. The gel obtained is dried and calcined in an inert atmosphere and then in an oxidating atmosphere.

The acid carrier of the catalyst of the present invention can be used as such or in extruded form. In the latter case, the carrier can be prepared with one of the methods described in published European patent applications EP 550.922 and EP 665.055 which comprise the use of a ligand consisting of an inert solid such as aluminum oxide. In particular, the carrier and ligand can be pre-mixed in weight ratios ranging from 30:70 to 90:10, preferably from 50:50 to 70:30. At the end of the mixing, the product obtained is consolidated in the end-form desired, for example in the form of extruded cylinders or pellets.

The metal phase (b) of the catalyst of the present invention can be introduced by means of aqueous or alcohol impregnation.

More specifically, according to the first technique, the silica and alumina gel, also in extruded form, prepared as described above, is wetted with an aqueous solution of a metal compound of group VIB, for example ammonium molybdate, operating at room temperature or at a temperature close to room temperature. After aqueous impregnation, the solid is dried, preferably in air, at a temperature of about 100°C and then a second impregnation is carried out with an aqueous solution of a compound of a non-noble metal of group VIII, for example nickel acetate or nitrate.

After aqueous impregnation, the solid is again dried, preferably in air, at a temperature close to 100°C and thermally treated in an oxidating atmosphere, preferably air. Temperatures suitable for this thermal treatment are between 200 and 600°C. The conditions are regulated so as to deposit on the particles of silica and alumina a quantity of metal of group VIII of 0.5 to 5% by weight, preferably from 1 to 3%, and a quantity of metal of group VIB of 1 to 50% by weight, preferably from 5 to 35%.

The aqueous impregnation of the metal phase can also be carried out in a single step, where the acid carrier based on silica and alumina is wetted with a single aqueous solution containing both the compounds of the metals of group VIB and VIII and proceeding with the same operating procedures described above.

In the alcohol impregnation technique the silica and alumina gel, also in extruded form, is suspended in an alcohol solution of a metal compound of group VIB, for example, molybdenum acetylacetonate, and a compound of a metal of group VIII, for example nickel acetylacetonate, operating at room temperature or at a temperature close to room temperature. After impregnation, the solid is dried, preferably in air, at a temperature of about 100°C and thermally treated in an oxidating atmosphere, preferably in air, as in the previous case.

After the impregnation operations, both aqueous and alcohol, bifunctional catalysts are obtained, of silica and alumina gel loaded with a mixture of metals of groups VIB and VIII, generally having a surface area of 150 to 350 $m^2$/g, in the case of extruded carriers, and 250 to 500 $m^2$/g in the case of gel.

The catalysts thus obtained are activated by sulfidation. The sulfidation process is carried out both in a reducing atmosphere of $H_2S/H_2$ at a temperature of 300-500°C and by treatment with carbon sulfide in a reducing atmosphere again within the temperature range of 300 to 500°C.

The hydroisomerization reaction can be carried out both in continuous and batch. It is effected in the presence of hydrogen at a temperature ranging from 200 to 550°C, preferably from 250 to 450°C, and at a hydrogen pressure ranging from atmospheric pressure to 25,000 KPa, preferably from 4,000 to 10,000 KPa.

The effective quantity of catalyst is generally between 0.5 and 30% by weight, preferably between 10 and 20%, with respect to the n-paraffins.

Some illustrative but non-limiting examples are provided for a better understanding of the present invention and for its embodiment.

## EXAMPLE 1

2 g of aluminum isopropylate are dissolved at room temperature in 68.5 g of aqueous solution of tetrapropylammonium hydroxide (TPA-OH at 13.35% by weight). The solution is left at 60°C and 104.1 g of tetraethylsilicate (TES) are added. The resulting mixture has the following molar ratios: $SiO_2/Al_2O_3$ = 102, $TPA\text{-}OH/SiO_2$ = 0.09 and $H_2O/SiO_2$ = 15.

On maintaining this mixture under stirring at 60°C for 40 minutes, there is the formation of a homogeneous gel which is dried in a stream of air at 90°C and then calcined at 550°C in a stream of nitrogen for 3 h and subsequently in a stream of air for a further 10 h at the same temperature.

A silica and alumina gel is obtained, amorphous to X-rays, with a quantitative yield with respect to the materials initially charged.

The active phase based on silica and alumina is bound to an inert carrier of aluminum oxide, the latter in a quantity of 39% by weight, and extruded into cylindrical pellets.

The material thus prepared is used as an acid carrier onto which the metals are deposited by means of aqueous impregnation. More specifically, 20 ml of an aqueous solution containing 1.3 g of $Mo_7(NH_4)_6O_{24}*4H_2O$ are added to 10 g of the extruded product placed in a rotavapor (60 rpm). The mixture is left under stirring for 16 h, the water is then evaporated at a temperature of 110°C in air for 1 h. The second impregnation is carried out with an analogous procedure to what is described above, using an aqueous solution of 1 g of $Ni(NO_3)_2*6H_2O$. The mixture is left under stirring for 16 h, the water is then evaporated at a temperature of 110°C in air for 1 h. The calcination is carried out in a muffle at 500°C for 4 h in a stream of air, heating at a rate of 3°C/min.

The characterization data of the catalyst are shown in Table 1.

## EXAMPLE 2

A carrier is used as in example 1, applying coimpregnation as the deposition method of the metal phase.

22 ml of an aqueous solution of 1 g of $Ni(CH_3COO)_2*4H_2O$ and 10 g of $Mo_7(NH_4)_6O_{24}*4H_2O$ are added dropwise and carefully mixed with 10 g of extruded product placed in a crystallizer. Contact is left for 16 h, the water is then evaporated at a temperature of 110°C in air for 1 h and the mixture calcined for 4 h at 500°C in a stream of air by heating at a rate of 3°C/min.

The characteristics of the catalyst are shown in Table 1.

## EXAMPLE 3

A catalyst is prepared starting from a carrier as in example 1, using alcohol impregnation as deposition method of the metal phase.

10 g of extruded product in a glass are suspended in an alcohol solution, consisting of 70 ml of ethanol, 40 ml of methanol and 2 ml of glacial acetic acid in which 14.7 g of molybdenum acetylacetonate and 5.8 g of nickel acetylacetonate are dissolved. After 16 h under stirring at room temperature, the solid is separated by centrifugation. The drying takes place at a temperature of 110°C in air for 1 h, whereas the calcination is carried out at 500°C for 4 h in a stream of air.

The characteristics of this catalyst are shown in Table 1.

## EXAMPLE 4 (Comparative)

A commercial catalyst is used as reference consisting of a system based on alumina, nickel, molybdenum, phosphorous.

The characteristics of this catalyst are shown in Table 1.

## EXAMPLE 5 (Comparative)

A catalyst is used consisting of a carrier as in example 1 and platinum deposited by acqueous impregnation according to what is described in published European patent 582.347.

The characteristics of this catalyst are indicated in Table 1.

## EXAMPLE 6 (Comparative)

A catalyst is prepared starting from γ-alumina as carrier and using the impregnation procedure described in example 2.

The characteristics of this catalyst are indicated in Table 1.

TABLE 1

| Example | Mo (wt %) | NI (wt %) | (*) area ($m^2$/g) |
|---|---|---|---|
| 1 | 6.5 | 1.98 | 333 |
| 2 | 29.8 | 1.19 | 137 |
| 3 | 10.4 | 3.09 | 271 |
| 4 | 13.4 | 2.98 | 203 |
| 5 | 0.185(**) | | 413 |
| 6 | 1.97 | 44.8 | 82 |

(*) after impregnation with the metals

(**) % relating to platinum

EXAMPLE 7

The catalyst of example 1 was tested in the hydroisomerization reaction of an n-$C_{16}$ paraffin in a micro-autoclave under the conditions described hereunder.

The micro-autoclave consists of a steel body and a top equipped with a series of valves for the pressurization, discharge and possible recovery of the gaseous products and a burst disk. The stirring system consists of an internal fine metal rod.

The reactor is charged with 8 g of n-$C_{16}$ paraffin and 0.5 g of catalyst previously activated. The system is pressurized at low temperature with $H_2$ at 5 MPa and then rapidly heated to a temperature of 360°C. Zero time is considered as the moment in which the temperature inside the reactor reaches the desired value.

After the reaction time (960 minutes), the reactor is cooled and depressurized, after which the reaction mixture is recovered. The analysis of the products to determine the conversion and their distribution is carried out directly on the mixture by gaschromatography. The data relating to the various groups of compounds were normalized with respect to the total area of the chromatogram.

Table 2 indicates the conversion and selectivity calculated as follows.

$$\% \text{ Conversion n-}C_{16} = 100 - \% \text{ Area non-reacted n-}C_{16}$$

$$\text{Selectivity iso-}C_{16}\text{-} = \frac{\% \text{ Area iso-}C_{16}\text{- products}}{\% \text{ Conversion}}$$

$$\text{Selectivity } C_{16} = \frac{\% \text{ Area } C_{16} \text{ products}}{\% \text{ Conversion}}$$

wherein: iso-$C_{16}$ is the mixture of isomers with a number of carbon atoms equal to 16 and $C_{16}$- is the mixture of cracking products with a number of carbon atoms less than 16.

Activation of the catalyst

0.55 g of catalyst are charged into an autoclave with 10 ml of n-$C_{16}$ and 1 ml of $CS_2$ to produce in situ the hydrogen sulfide necessary for the sulfidation. The reactor is then pressurized at room temperature a 80 atms with $H_2$ and brought to 370°C with a heating rate of 10°C/min, contemporaneously stirring the mixture at 800 rpm. The sulfidation is prolonged for 4 hours at the final temperature.

When the activation phase has been completed, the reactor is depressurized and the mixture is filtered to recover the catalyst. The catalyst is subsequently washed with n-pentane and dried under vacuum at room temperature.

EXAMPLE 8

A catalyst as per example 2, is used in the hydroisomerization of $C_{16}$ n-paraffins. The reaction conditions are maintained as in example 7. Table 2 indicates the conversion and selectivity.

EXAMPLE 9

A catalyst as per example 3, is used in the hydroisomerization of $C_{16}$ n-paraffins. The reaction conditions are maintained as in example 7. Table 2 indicates the conversion and selectivity.

EXAMPLE 10 (Comparative)

A catalyst as per example 4, is used in the hydroisomerization of $C_{16}$ n-paraffins. The reaction conditions are maintained as in example 7. Table 2 indicates the conversion and selectivity.

EXAMPLE 11 (Comparative)

A catalyst as per example 5, is used in the hydroisomerization of $C_{16}$ n-paraffins. The reaction conditions are maintained as in example 7. Table 2 indicates the conversion and selectivity.

EXAMPLE 12 (Comparative)

A catalyst as per example 5, is used in the hydroisomerization of $C_{16}$ n-paraffins. The reaction conditions are maintained as in example 7, except for the reaction time which is reduced to 480 minutes. Table 2 indicates the conversion and selectivity.

EXAMPLE 13 (Comparative)

A catalyst as per example 6, is used in the hydroisomerization of $C_{16}$ n-paraffins. The reaction conditions are maintained as in example 7. Table 2 indicates the conversion and selectivity.

TABLE 2

| Example | Conv. (%) | iso-$C_{16}$ (%) | Cracking (%) | Select. iso-$C_{16}$ |
|---------|-----------|------------------|--------------|----------------------|
| 7 | 43.38 | 40.38 | 3.00 | 0.93 |
| 8 | 32.67 | 29.83 | 2.84 | 0.91 |
| 9 | 49.69 | 46.73 | 2.96 | 0.94 |
| 10 | 11.99 | 11.16 | 0.83 | 0.93 |
| 11 | 62.52 | 55.60 | 6.92 | 0.89 |
| 12 | 39.86 | 36.24 | 3.61 | 0.91 |
| 13 | 14.36 | 10.27 | 4.09 | 0.71 |

EXAMPLE 14

A catalyst as per example 2, is used in the hydroisomerization of $C_{16}$ n-paraffins. The reaction conditions are maintained as in example 7, except for the reaction time which is reduced to 480 minutes. Table 3 indicates the conversion and selectivity.

EXAMPLE 15

A catalyst as per example 1, is used in the hydroisomerization of $C_{16}$ n-paraffins. The reaction conditions are maintained as in example 14. Table 3 indicates the conversion and selectivity.

EXAMPLE 16

A catalyst as per example 1, is used in the hydroisomerization of $C_{16}$ n-paraffins. The reaction conditions are maintained as in example 14, except for the reaction temperature which is reduced to 345°C. Table 3 indicates the conversion and selectivity.

EXAMPLE 17 (Comparative)

A catalyst as per example 4, is used in the hydroisomerization of $C_{16}$ n-paraffins. The reaction conditions are maintained as in example 14. Table 3 indicates the conversion and selectivity.

EXAMPLE 18 (Comparative)

A catalyst as per example 4, is used in the hydroisomerization of $C_{16}$ n-paraffins. The reaction conditions are maintained as in example 14, except for the reaction temperature which is reduced to 345°C. Table 3 indicates the conversion and selectivity.

EXAMPLE 19

A catalyst as per example 2, is used in the hydroisomerization of $C_{16}$ n-paraffins. The reaction conditions are maintained as in example 7, except for the loading which consists of 97% by weight of n-$C_{16}$ and 3% of dibenzothiophene. Table 3 indicates the conversion and selectivity.

EXAMPLE 20 (Comparative)

A catalyst as per example 5, is used in the hydroisomerization of $C_{16}$ n-paraffins. The reaction conditions are maintained as in example 19, except for the reaction time which is reduced to 240 minutes. Table 3 indicates the conversion and selectivity.

TABLE 3

| Example | Conv. (%) | iso-$C_{16}$ (%) | Cracking (%) | Select. iso-$C_{16}$ |
|---------|-----------|------------------|--------------|----------------------|
| 14 | 17.97 | 16.56 | 1.41 | 0.92 |
| 15 | 23.53 | 22.34 | 1.19 | 0.94 |
| 16 | 14.94 | 14.80 | 0.14 | 0.99 |
| 17 | 6.22 | 6.08 | 0.14 | 0.97 |
| 18 | 1.28 | 1.21 | 0.07 | 0.94 |
| 19 | 31.47 | 28.26 | 3.25 | 0.90 |
| 20 | 9.26 | 3.07 | 5.22 | 0.33 |

**Claims**

1. A process for the hydroisomerization of long-chain n-paraffins which comprises isomerizing n-paraffins having a number of carbon atoms higher than 15 in the presence of hydrogen and a hydroisomerization catalyst which comprises:

   a) a carrier of acid nature consisting of a silica and alumina gel amorphous to X-rays, with a molar ratio $SiO_2/Al_2O_3$ ranging from 30/1 to 500/1, and having a surface area ranging from 500 to 1,000 m$^2$/g, a porosity ranging from 0.3 to 0.6 ml/g and a pore diameter within the range of 10-40 Angstrom;
   b) a mixture of metals belonging to groups VIB and VIII deposited on the carrier in an overall quantity ranging from 2 to 50% by weight of the total (a) + (b).

2. The process according to claim 1, wherein the acid carrier (a) has a ratio $SiO_2/Al_2O_3$ ranging from 50/1 to 300/1 and a porosity ranging from 0.4 to 0.5 ml/g.

3. The process according to claim 1 or 2, wherein the mixture of metals (b) consists of a metal of group VIB selected from molybdenum and tungsten, in a quantity ranging from 5 to 35% by weight and a non-noble metal of group VIII selected from nickel and cobalt, in a quantity ranging from 0.1 to 5% by weight.

4. The process according to any of the previous claims, wherein the acid carrier (a) is used as such or in extruded form.

5. The process according to claim 4, wherein the extruded carrier is premixed with a ligand consisting of an inert solid and consolidated in the end-form desired.

6. The process according to any of the previous claims, wherein the hydroisomerization reaction is carried out in the presence of hydrogen at a temperature ranging from 200 to 550°C and at a hydrogen pressure ranging from atmospheric pressure to 25,000 KPa.

**7.** The process according to any of the previous claims, wherein the catalyst is used in quantities ranging from 0.5 to 30% by weight with respect to the n-paraffins.

**8.** A bifunctional catalyst comprising:

a) a carrier of acid nature consisting of a silica and alumina gel amorphous to X-rays, with a molar ratio $SiO_2/Al_2O_3$ ranging from 30/1 to 500/1, and having a surface area ranging from 500 to 1,000 $m^2/g$, a porosity ranging from 0.3 to 0.6 ml/g and a pore diameter within the range of 10-40 Angstrom;
b) a mixture of metals belonging to groups VIB and VIII deposited on the carrier in an overall quantity ranging from 2 to 50% by weight of the total (a) + (b).

**9.** The catalyst according to claim 8, wherein the acid carrier (a) has a ratio $SiO_2/Al_2O_3$ ranging from 50/1 to 300/1 and a porosity ranging from 0.4 to 0.5 ml/g.

**10.** The catalyst according to claim 8 or 9, wherein the mixture of metals (b) consists of a metal of group VIB selected from molybdenum and tungsten, in a quantity ranging from 5 to 35% by weight, and a non-noble metal of group VIII selected from nickel and cobalt, in a quantity ranging from 0.1 to 5% by weight.

**11.** A process for the preparation of the catalyst according to claims 8 to 10 which comprises:

i) wetting the silica and alumina gel, also in extruded form, with an aqueous solution of a compound of a metal of group VIB operating at room temperature;
ii) drying the silica and alumina gel thus treated;
iii) wetting the dried silica and alumina gel with an aqueous solution of a compound of a non-noble metal of group VIII;
iv) drying the silica and alumina gel thus treated;
v) thermally treating the dried gel after step (iv) in an oxidating atmosphere at a temperature ranging from 200 to 600°C.

**12.** A process for the preparation of the catalyst according to claims 8 to 10 which comprises:

i) wetting the silica and alumina gel, also in extruded form, with an aqueous solution of a compound of a metal of group VIB and a compound of a non-noble metal of group VIII operating at room temperature;
ii) drying the silica and alumina gel thus treated;
iii) thermally treating the dried gel in an oxidating atmosphere at a temperature ranging from 200 to 600°C.

**13.** A process for the preparation of the catalyst according to claims 8 to 10 which comprises:

i) suspending the silica and alumina gel, also in extruded form, in an alcohol solution of a compound of a metal of group VIB and a compound of a non-noble metal of group VIII operating at room temperature;
ii) drying the silica and alumina gel thus treated;
iii) thermally treating the dried gel in an oxidating atmosphere at a temperature ranging from 200 to 600°C.

**14.** The process according to any of the claims from 11 to 13, wherein the catalysts are activated by sulfidation.

**Patentansprüche**

**1.** Verfahren für die Hydroisomerisierung von langkettigen n-Paraffinen, welches das Isomerisieren von n-Paraffinen mit einer Anzahl von Kohlenstoffatomen größer als 15 in Gegenwart von Wasserstoff und einem Hydroisomerisierungskatalysator umfaßt, bestehend aus:

a) einem Träger von Säurebeschaffenheit, bestehend aus einem für Röntgenstrahlen amorphen Silica- und Alumogel mit einem Molverhältnis $SiO_2/Al_2O_3$ im Bereich von 30/1 bis 500/1 und mit einem Oberflächeninhalt im Bereich von 500 bis 1.000 $m^2/g$, einer Porosität im Bereich von 0,3 bis 0,6 ml/g und einem Porendurchmesser im Bereich von 10 bis 40 Angström;
b) einem Gemisch von zu den Gruppen VIB und VIII gehörenden Metallen, abgelagert auf dem Träger in einer Gesamtmenge im Bereich von 2 bis 50 Gew.-% der Gesamtsumme (a)+(b).

2. Verfahren nach Anspruch 1, bei dem der Säureträger (a) ein Verhältnis $SiO_2/Al_2O_3$ im Bereich von 50/1 bis 300/1 und eine Porosität im Bereich von 0,4 bis 0,5 ml/g aufweist.

3. Verfahren nach Anspruch 1 oder 2, bei dem das Gemisch von Metallen (b) aus einem Metall der Gruppe VIB, ausgewählt aus Molybdän und Wolfram, in einer Menge im Bereich von 5 bis 35 Gew.-% und einem Nicht-Edelmetall der Gruppe VIII, ausgewählt aus Nickel und Kobalt, in einer Menge im Bereich von 0,1 bis 5 Gew.-% besteht.

4. Verfahren nach einem der vorhergehenden Ansprüche, bei dem der Säureträger (a) als solcher oder in extrudierter Form verwendet wird.

5. Verfahren nach Anspruch 4, bei dem der extrudierte Träger mit einem aus einem inerten Feststoff bestehenden Liganden vorgemischt und in der gewünschten Endform konsolidiert wird.

6. Verfahren nach einem der vorhergehenden Ansprüche, bei dem die Hydroisomerisierungsreaktion in Gegenwart von Wasserstoff bei einer Temperatur im Bereich von 200 bis 550° C und bei einem Wasserstoffdruck im Bereich von athmosphärischem Druck bis 25.000 KPa durchgeführt wird.

7. Verfahren nach einem der vorhergehenden Ansprüche, bei dem der Katalysator in Mengen im Bereich von 0,5 bis 30 Gew.-% in bezug auf die n-Paraffine verwendet wird.

8. Bifunktionaler Katalysator, bestehend aus:

a) einem Träger von Säurebeschaffenheit, bestehend aus einem für Röntgenstrahlen amorphen Silica- und Alumogel mit einem Molverhältnis $SiO_2/Al_2O_3$ im Bereich von 30/1 bis 500/1 und einem Oberflächeninhalt im Bereich von 500 bis 1.000 m$^2$/g, einer Porosität im Bereich von 0,3 bis 0,6 ml/g und einem Porendurchmesser im Bereich von 10 bis 40 Angström;

b) einem Gemisch von zu den Gruppen VIB und VIII gehörenden Metallen, abgelagert auf dem Träger in einer Gesamtmenge im Bereich von 2 bis 50 Gew.-% der Gesamtsumme (a) + (b).

9. Katalysator nach Anspruch 8, bei dem der Säureträger (a) ein Verhältnis $SiO_2/Al_2O_3$ im Bereich von 50/1 bis 300/1 und eine Porosität im Bereich von 0,4 bis 0,5 ml/g aufweist.

10. Katalysator nach Anspruch 8 oder 9, bei dem das Gemisch von Metallen (b) aus einem Metall der Gruppe VIB, ausgewählt aus Molybdän und Wolfram, in einer Menge im Bereich von 5 bis 35 Gew.-% und einem Nicht-Edelmetall der Gruppe VIII, ausgewählt aus Nickel und Kobalt, in einer Menge im Bereich von 0,1 bis 5 Gew.-% besteht.

11. Verfahren zur Herstellung des Katalysators nach den Ansprüche 8 bis 10, bestehend aus:

i) Befeuchten des Silica- und Alumogels, auch in extrudierter Form, mit einer wäßrigen Lösung einer Verbindung eines Metalls der Gruppe VIB bei Raumtemperatur arbeitend;
ii) Trocknen des so behandelten Silica- und Alumogels;
iii) Befeuchten des getrockneten Silica- und Alumogels mit einer wäßrigen Lösung einer Verbindung eines Nicht-Edelmetalls der Gruppe VIII;
iv) Trocknen des so behandelten Silica- und Alumogels;
v) Wärmebehandeln des getrockneten Gels nach dem Schritt (iv) in einer Oxidationsatmosphäre bei einer Temperatur im Bereich von 200 bis 600° C.

12. Verfahren zur Herstellung des Katalysators nach den Ansprüchen 8 bis 10, bestehend aus:

i) Befeuchten des Silica- und Alumogels, auch in extrudierter Form, mit einer wäßrigen Lösung einer Verbindung eines Metalls der Gruppe VIB und einer Verbindung eines Nicht-Edelmetalls der Gruppe VIII bei Raumtemperatur arbeitend;
ii) Trocknen des so behandelten Silica- und Alumogels;

iii) Wärmebehandeln des getrockneten Gels in einer Oxidationsatmosphäre bei einer Temperatur im Bereich von 200 bis 600° C.

**13.** Verfahren zur Herstellung des Katalysators nach den Ansprüchen 8 bis 10, bestehend aus:

i) Suspendieren des Silica- und Alumogels, auch in extrudierter Form, in einer Alkohollösung aus einer Verbindung eines Metalls der Gruppe VIB und einer Verbindung eines Nicht-Edelmetalls der Gruppe VIII bei Raumtemperatur arbeitend;
ii) Trocknen des so behandelten Silica- und Alumogels;
iii) Wärmebehandeln des getrockneten Gels in einer Oxidationsatmosphäre bei einer Temperatur im Bereich von 200 bis 600° C.

**14.** Verfahren nach einem der Ansprüche 11 bis 13, bei dem die Katalysatoren durch Sulfidation aktiviert werden.

**Revendications**

**1.** Procédé d'hydroisomérisation des n-paraffines à longues chaînes qui comprend l'isomérisation des n-paraffines ayant un nombre d'atomes de carbone supérieur à 15 en présence d'hydrogène et d'un catalyseur d'hydroisomérisation qui comprend :

a) un support de nature acide consistant en un gel de silice et d'alumine amorphe aux rayons X, avec un rapport molaire $SiO_2/Al_2O_3$ allant de 30/1 à 500/1, et ayant une surface allant de 500 à 1000 $m^2$/g, une porosité allant de 0,3 à 0,6 ml/g et un diamètre de pore dans la gamme de 10-40 Angstroem ;
b) un mélange de métaux appartenant aux groupes VIB et VIII déposé sur le support dans une quantité globale allant de 2 à 50% en poids du total (a) +(b).

**2.** Procédé selon la revendication 1, dans lequel le support acide (a) a un rapport $SiO_2/Al_2O_3$ allant de 50/1 à 300/1 et une porosité allant de 0,4 à 0,5 ml/g.

**3.** Procédé selon la revendication 1 ou 2, dans lequel le mélange de métaux (b) consiste en un métal du groupe VIB choisi parmi le molybdène et le tungstène, dans une quantité allant de 5 à 35% en poids, et un métal non noble du groupe VIII choisi parmi le nickel et le cobalt, dans une quantité allant de 0,1 à 5% en poids.

**4.** Procédé selon l'une quelconque des revendications précédentes, dans lequel le support acide (a) est utilisé tel que ou sous forme extrudée.

**5.** Procédé selon la revendication 4, dans lequel le support extrudé est prémélangé avec un ligand consistant en un solide inerte et consolidé dans la forme finale désirée.

**6.** Procédé selon l'une quelconque des revendications précédentes, dans lequel la réaction d'hydroisomérisation est réalisée en présence d'hydrogène à une température allant de 200 à 550°C et à une pression d'hydrogène allant de la pression atmosphérique à 25000 kPa.

**7.** Procédé selon l'une quelconque des revendications précédentes, dans lequel le catalyseur est utilisé dans des quantités allant de 0,5 à 30% en poids rapportées aux n-paraffines.

**8.** Catalyseur bifonctionnel comprenant

a) un support de nature acide consistant en un gel de silice et d'alumine amorphe aux rayons X, avec un rapport molaire $SiO_2/Al_2O_3$ allant de 30/1 à 500/1, et ayant une surface allant de 500 à 1000 $m^2$/g, une porosité allant de 0,3 à 0,6 ml/g et un diamètre de pore dans la gamme de 10-40 Angstraem ;
b) un mélange de métaux appartenant aux groupes VIB et VIII déposé sur le support dans une quantité globale allant de 2 à 50% en poids du total (a) +(b).

**9.** Catalyseur selon la revendication 8, dans lequel le support acide (a) a un rapport $SiO_2/Al_2O_3$ allant de 50/1 à 300/1 et une porosité allant de 0,4 à 0,5 ml/g.

10. Catalyseur selon la revendication 8 ou 9, dans lequel le mélange de métaux (b) consiste en un métal du groupe VIB choisi parmi le molybdène et le tungstène, dans une quantité allant de 5 à 35% en poids, et un métal non noble du groupe VIII choisi parmi le nickel et le cobalt, dans une quantité allant de 0,1 à 5% en poids.

11. Procédé de préparation du catalyseur selon les revendications 8 à 10 qui comprend :

(i) le mouillage du gel de silice et d'alumine, également sous forme extrudée, avec une solution aqueuse d'un composé d'un métal du groupe VIB pratiqué à température ambiante ;
(ii) le séchage du gel de silice et d'alumine ainsi traité ;
(iii) le mouillage du gel de silice et d'alumine séché avec une solution aqueuse d'un composé d'un métal non noble du groupe VIII ;
(iv) le séchage du gel de silice et d'alumine ainsi traité ;
(v) le traitement thermique du gel séché après l'étape (iv) dans une atmosphère oxydante à une température allant de 200 à 600°C.

12. Procédé de préparation du catalyseur selon les revendications 8 à 10 qui comprend :

(i) le mouillage du gel de silice et d'alumine, également sous forme extrudée, avec une solution aqueuse d'un composé d'un métal du groupe VIB et d'un composé d'un métal non noble du groupe VIII pratiqué à température ambiante ;
(ii) le séchage du gel de silice et d'alumine ainsi traité ;
(iii) le traitement thermique du gel séché dans une atmosphère oxydante à une température allant de 200 à 600°C.

13. Procédé de préparation du catalyseur selon les revendications 8 à 10 qui comprend :

(i) la mise en suspension du gel de silice et d'alumine, également sous forme extrudée, dans une solution alcoolique d'un composé d'un métal du groupe VIB et d'un composé d'un métal non noble du groupe VIII pratiquée à température ambiante ;
(ii) le séchage du gel de silice et d'alumine ainsi traité ;
(iii) le traitement thermique du gel séché dans une atmosphère oxydante à une température allant de 200 à 600°C.

14. Procédé selon l'une quelconque des revendications 11 à 13, dans lequel les catalyseurs sont activés par sulfuration.